# EUROPEAN PATENT APPLICATION

(11) **EP 4 794 311 A1**
(43) Date of publication of application: **19.08.2026**
(21) Application number: 25837951.0
(22) Date of filing: 27.05.2025
(51) Int. Cl.: H04L 67/63

(54) **COMMUNICATION METHOD, COMMUNICATION APPARATUS, ELECTRONIC DEVICE, AND STORAGE MEDIUM**

(30) Priority: 25.12.2024 CN 202411923926
(71) Applicant: HYGON INFORMATION TECHNOLOGY CO., LTD., Binhai New Area, Tianjin 300392 (CN)
(72) Inventor: SHEN, Xiang, Tianjin 300392 (CN); LI, Kai, Tianjin 300392 (CN); WANG, Qiwei, Tianjin 300392 (CN)
(74) Representative: Maiwald GmbH
(86) International application number: PCT/CN2025/097466
(87) International publication number: WO 2026/137692

(57) **Abstract**

A communication method, a communication apparatus, an electronic device and a storage medium. The communication method is applied to a first apparatus, and the communication method includes: acquiring, in response to a plurality of access requests from a sender to a plurality of addresses in a receiver, a communication packet encapsulated from request information of the plurality of access requests, where the request information of each of the plurality of access requests includes an operation type and an operation address; and transmitting the communication packet to the receiver, for the receiver to parse the communication packet to obtain the request information of each of the plurality of access requests. The communication method is capable of improving the performance of the multiple dies communication.

## Description

### CROSS-REFERENCE TO RELATED APPLICATION

The present application claims the priority to Chinese Patent Application No. 202411923926.8 filed on December 25, 2024, the entire disclosure of which is incorporated herein by reference as a portion of the present application.

### TECHNICAL FIELD

Embodiments of the present disclosure relate to a communication method, a communication apparatus, an electronic device, and a storage medium.

### BACKGROUND

As demand continues to rise, the performance of a single die (a chip that has not been packaged) may no longer meet the demand, and multiple dies designs have emerged. However, the communication bandwidth requirements between multiple dies have been a difficult problem, and the cost of continuously improving the performance with increasing hardware overheads will become higher and higher. With the parallel bus communication and serial bus communication alternately upgraded, the bandwidth remains the bottleneck for communication between multiple dies.

### SUMMARY

At least one embodiment of the present disclosure provides a communication method, applied to a first apparatus, and the communication method includes: acquiring, in response to a plurality of access requests from a sender to a plurality of addresses in a receiver, a communication packet encapsulated from request information of the plurality of access requests, where the request information of each of the plurality of access requests includes an operation type and an operation address; and transmitting the communication packet to the receiver, for the receiver to parse the communication packet to obtain the request information of each of the plurality of access requests.

For example, in the communication method provided by at least some embodiments of the present disclosure, the communication packet includes a packet header and a packet body, where the packet header includes the operation type of each of the plurality of access requests and a quantity of a plurality of operation addresses, and the packet body includes an operation address of each of the plurality of operation addresses.

For example, in the communication method provided by at least some embodiments of the present disclosure, the packet body includes a plurality of fields that are set in sequence, each of the plurality of fields is configured to record an operation address of a single access request in request information of the plurality of access requests.

For example, in the communication method provided by at least some embodiments of the present disclosure, in response to the operation type being a write operation, the packet body further includes object data to be operated respectively by each of the plurality of access requests, and each of the plurality of fields is further configured to record object data of the single access request in the request information of the plurality of access requests.

For example, in the communication method provided by at least some embodiments of the present disclosure, the sender and the receiver are located respectively in the first apparatus and a second apparatus, and the first apparatus and the second apparatus are communicatively connected through an interconnect bus.

For example, in the communication method provided by at least some embodiments of the present disclosure, the first apparatus and the second apparatus include a core or a chiplet.

For example, in the communication method provided by at least some embodiments of the present disclosure, the first apparatus includes a plurality of first functional units, a first communication bus and a first data fabric, the plurality of first functional units includes the sender, and the plurality of first functional units are communicatively connected to each other through the first communication bus and the first data fabric.

For example, in the communication method provided by at least some embodiments of the present disclosure, the transmitting the communication packet to the receiver includes: in response to the communication packet being arbitrated by the first data fabric, transmitting the communication packet to the receiver.

For example, in the communication method provided by at least some embodiments of the present disclosure, the transmitting the communication packet includes: transmitting the communication packet by using a communication protocol, where the communication protocol provides a plurality of information channels, and the plurality of information channels includes a request channel, a read response channel, a write response channel, and a data channel.

For example, in the communication method provided by at least some embodiments of the present disclosure, the transmitting the communication packet to the receiver includes: transmitting, by the first apparatus, the communication packet to the receiver through the data channel.

For example, in the communication method provided by at least some embodiments of the present disclosure, the transmitting the communication packet to the receiver includes: transmitting, by the first apparatus, the communication packet to the receiver through a write command.

For example, in the communication method provided by at least some embodiments of the present disclosure, the transmitting the communication packet to the receiver includes: splitting, by the first apparatus, the communication packet into multiple beats and transmitting the communication packet to the receiver.

For example, in the communication method provided by at least some embodiments of the present disclosure, the plurality of access requests are a plurality of write commands, and acquiring the communication packet encapsulated from the request information of the plurality of access requests includes: filling the request information of the plurality of write commands into the communication packet in the first apparatus to encapsulate and obtain the communication packet.

For example, in the communication method provided by at least some embodiments of the present disclosure, the communication method further includes: receiving, in response to the second apparatus receiving the plurality of write commands, a write response sent by the receiver.

For example, in the communication method provided by at least some embodiments of the present disclosure, the plurality of access requests is a plurality of read commands, and acquiring the communication packet encapsulated from the request information of the plurality of access requests includes: filling the request information of the plurality of read commands into the communication packet in the first apparatus to encapsulate and obtain the communication packet.

For example, in the communication method provided by at least some embodiments of the present disclosure, the transmitting the communication packet to the receiver includes: after the first apparatus encapsulates and obtains the communication packet, the first apparatus sending a write command, and transmitting the communication packet to the second apparatus through the write command.

For example, in the communication method provided by at least some embodiments of the present disclosure, the communication method further includes: receiving a read response sent by the receiver.

For example, in the communication method provided by at least some embodiments of the present disclosure, in response to completing the plurality of read commands requiring multiple beats return data, the read response includes multiple beats read response information, and a quantity of beats of the multiple beats return data is equal to a quantity of beats of the multiple beats read response information.

At least some embodiments of the present disclosure further provide a communication method, applied to a second apparatus, and the communication method includes: receiving a communication packet from a sender, where the communication packet is obtained by encapsulating request information of a plurality of access requests from the sender for a plurality of addresses in a receiver, and the request information of each of the plurality of access requests includes an operation type and an operation address; parsing the communication packet to obtain the request information of each of the plurality of access requests; and executing the plurality of access requests respectively according to the request information of each of the plurality of access requests obtained by parsing the communication packet.

For example, in the communication method provided by at least some embodiments of the present disclosure, the sender and the receiver are respectively located in a first apparatus and the second apparatus, and the first apparatus and the second apparatus are communicatively connected through an interconnect bus, where the second apparatus includes a plurality of second functional units, a second communication bus and a second data fabric, the plurality of second functional units includes the receiver, and the plurality of second functional units are communicatively connected to each other through the second communication bus and the second data fabric.

For example, in the communication method provided by at least some embodiments of the present disclosure, the receiving a communication packet from a sender includes: in response to the communication packet being arbitrated by the second data fabric, the receiver receiving the communication packet from the sender.

For example, in the communication method provided by at least some embodiments of the present disclosure, the receiving a communication packet from a sender includes: in response to the first apparatus transmitting the communication packet through a write command, the second apparatus receiving the communication packet from the sender and generating a response to the write command.

For example, in the communication method provided by at least some embodiments of the present disclosure, the plurality of access requests are a plurality of write commands, the parsing the communication packet to obtain the request information of each of the plurality of access requests includes: parsing the communication packet to obtain a write command address and write command data of each of the plurality of write commands, and the communication method further includes: in response to a data module of the second apparatus receiving the plurality of write commands, sending a write response to the sender.

For example, in the communication method provided by at least some embodiments of the present disclosure, the plurality of access requests are a plurality of read commands, the receiving a communication packet from a sender includes: receiving the communication packet from the sender through receiving a write command; and the communication method further includes: in response to the second apparatus completing the plurality of read commands, sending a read response to the sender.

At least some embodiments of the present disclosure further provide a communication apparatus, configured in a first apparatus, and the communication apparatus includes: an encapsulation module, configured to acquire, in response to a plurality of access requests from a sender to a plurality of addresses in a receiver, a communication packet encapsulated from request information of the plurality of access requests, where the request information of each of the plurality of access requests includes an operation type and an operation address; and a transmission module, configured to transmit the communication packet to the receiver, for the receiver to parse the communication packet to obtain the request information of each of the plurality of access requests.

At least some embodiments of the present disclosure further provide a communication apparatus, configured in a second apparatus, and the communication apparatus includes: a receiving module, configured to receive a communication packet from a sender, where the communication packet is obtained by encapsulating request information of a plurality of access requests from the sender for a plurality of addresses in a receiver, and the request information of each of the plurality of access requests includes an operation type and an operation address; a parsing module, configured to parse the communication packet to obtain the request information of each of the plurality of access requests; and an execution module, configured to execute the plurality of access requests respectively according to request information of each of the plurality of access requests obtained by parsing the communication packet.

At least some embodiments of the present disclosure further provide an electronic device, and the electronic device includes: at least one processor, and a memory, storing computer-readable instructions non-transitorily, where when the computer-readable instructions are executed by the at least one processor, the communication method provided by any embodiment of the present disclosure is executed.

At least some embodiments of the present disclosure further provide a non-transitory storage medium, the non-transitory storage medium storing computer-readable instructions non-transitorily, where when the computer-readable instructions are executed by a computer, the communication method provided by any embodiment of the present disclosure is executed.

### BRIEF DESCRIPTION OF DRAWINGS

In order to clearly illustrate the technical solution of the embodiments of the present disclosure, the drawings of the embodiments will be briefly described in the following; it is obvious that the drawings in the following description are only related to some embodiments of the present disclosure and thus are not limitative of the present disclosure.
Fig. 1 is a schematic diagram of a die interconnection structure provided by some embodiments of the present disclosure;
Fig. 2 is a schematic diagram of a communication bus protocol provided by some embodiments of the present disclosure;
Fig. 3 is a schematic flowchart of a communication method provided by some embodiments of the present disclosure;
Fig. 4 is a schematic diagram of the structure of a communication packet provided by some embodiments of the present disclosure;
Fig. 5 is a schematic diagram of the structures of a first apparatus and a second apparatus provided by some embodiments of the present disclosure;
Fig. 6 is a schematic flowchart of a process for executing a write command provided by some embodiments of the present disclosure;
Fig. 7 is a schematic flowchart of a process for executing a read command provided by some embodiments of the present disclosure;
Fig. 8 is a schematic flowchart of another communication method provided by some embodiments of the present disclosure;
Fig. 9 is a schematic diagram of a communication apparatus provided by some embodiments of the present disclosure;
Fig. 10 is a schematic diagram of another communication apparatus provided by some embodiments of the present disclosure;
Fig. 11 is a schematic diagram of the structure of an electronic device provided by some embodiments of the present disclosure; and
Fig. 12 is a schematic diagram of a storage medium provided by some embodiments of the present disclosure.

### DETAILED DESCRIPTION

In order to make purposes, technical solutions and advantages of the embodiments of the present disclosure apparent, the technical solutions of the embodiments of the present disclosure will be described in a clearly and fully understandable way in connection with the drawings related to the embodiments of the present disclosure. Apparently, the described embodiments are just a part but not all of the embodiments of the present disclosure. Based on the described embodiments herein, those skilled in the art can obtain other embodiments, without any inventive work, which should be within the scope of protection of the present disclosure.

Unless otherwise defined, all the technical and scientific terms used herein have the same meanings as commonly understood by one of ordinary skill in the art to which the present disclosure belongs. The terms "first," "second," etc., which are used in the the present disclosure, are not intended to indicate any sequence, quantity or importance, but distinguish various components. The terms "comprise," "comprising," "include," "including," etc., are intended to specify that the elements or the objects stated before these terms encompass the elements or the objects and equivalents thereof listed after these terms, but do not preclude the other elements or objects. The phrases "connect", "connected", etc., are not intended to define a physical connection or mechanical connection, but may include an electrical connection, whether direct or indirect. "On," "under," "left," "right" and the like are only used to indicate relative position relationship, and when the position of the object which is described is changed, the relative position relationship may be changed accordingly.

The following describes the present disclosure through several specific embodiments. In order to maintain clarity and conciseness of the following illustration of the embodiments of the present disclosure, detailed illustration of known functions and components(elements) is omitted in the present disclosure. When any components(elements) of an embodiment of the present disclosure appear in more than one drawing, the components(elements) is represented in each drawing by the same or similar reference numeral.

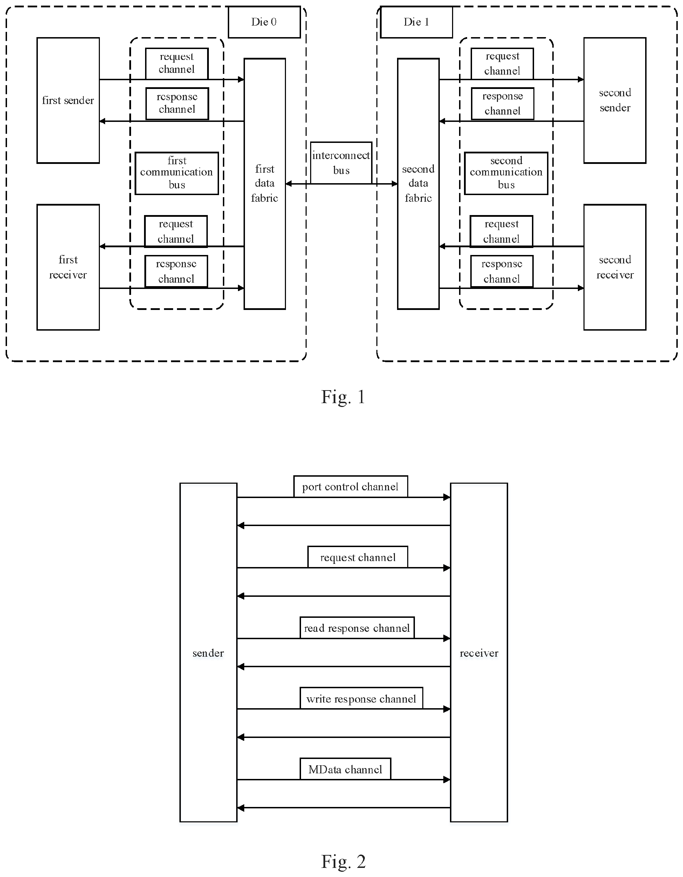

Fig. 1 is a schematic diagram of a die interconnection structure provided by some embodiments of the present disclosure.

The two dashed boxes from left to right in Fig. 1 represent respectively Die 0 and Die 1, and Die 0 and Die 1 are communicatively connected through an interconnect bus. The circuit structures of Die 0 and Die 1 may be the same or similar, and the following takes Die 0 as an example to describe the main circuit structure within a die. Die 0 mainly includes a first sender (Master or host), a first receiver (Slave or slave device), a first communication bus, and a first data fabric, etc. The first sender is the initiator of communication requests, and the first receiver is the receiver of communication requests. The first data fabric is the data channel for communication requests, which generally connects a plurality of senders and a plurality of receivers (Fig. 1 1only shows a sender and a receiver connected by a data fabric as an example), and determines from which sender to which receiver through arbitration. The first communication bus is a type of data bus, which defines the format of communication transmission and corresponding constraints, the communication bus may include a request channel and a response channel. Similarly, Die 1 includes a second sender, a second receiver, a second communication bus, and a second data fabric, etc., whose definitions and functions are the same as those of the corresponding structures in Die 0, and will not be repeated here.

The general communication process is that a sender sends a request, and the request is transmitted to a receiver through a communication path, the receiver receives the request and performs corresponding processing, and returns a response to the sender after the processing is completed, the sender thereby knows that the communication is completed.

Taking Die 0 and Die 1 illustrated in Fig. 1 as an example, the first sender of Die 0 sends a request, and the request is first transmitted to the first data fabric, and the first data fabric arbitrates the request and determines which receiver the request is sent to, for example, it may be a request to the die itself, i.e., Die 0, or it may be a request to another die, such as Die 1. When the request is sent to Die 0, it is forwarded directly to the first receiver for processing. When the request is sent to Die 1, the request needs to be transferred to the second data fabric of Die 1 through the interconnect bus, the second data fabric of Die 1 parses the request, sends the request to the second receiver of Die 1 after arbitration, and the second receiver parses the request after receiving it, and then carries out the corresponding operation; after the processing is completed, a response is returned to the second data fabric of Die 1, and the second data fabric of Die 1 transmits the response to the first data fabric of Die 0 through the interconnect bus, the response is returned to the first sender of Die 0 after being arbitrated by the first data fabric, thus a cross-die communication is completed.

Fig. 2 shows a schematic diagram of a communication bus protocol provided by some embodiments of the present disclosure. For example, communication within a die and cross-die communication between Die 0 and Die 1 in the above embodiments may be performed using the communication bus protocol illustrated in Fig. 2.

The communication bus illustrated in Fig. 2 defines a sender, a receiver, and 5 main channels for information transmission between the sender and the receiver. The 5 channels include a port control channel, a request channel, a read response channel, a write response channel, and a data (MData) channel. the port control channel may be used for the clk connection between the sender and receiver, and communication may be performed only after the clock (Clk) connection is completed. The request channel determines the type of a request through a command, for example, the request may include other command operations such as a write command, a read command, etc. The read response channel and the write response channel are both response channels, the difference between the two is that the read response channel needs to return data information, while the write response channel does not need to return data, only needs the corresponding label information. The data channel may be used with the write command to transmit the data of the write command, while the read command does not need to send data.

It should be noted that, in order to ensure the accuracy of communication, the port control channel, request channel, read response channel, write response channel and data channel may respectively perform handshaking and communication through the valid/ready mechanism, and these channels may use the credit mechanism for flow control and so on.

As demand continues to rise, the performance of a single die may no longer meet the demand, multiple dies design has appeared in many products. But how to meet the demand for multiple dies communication bandwidth has been a difficult point, continuously improving performance while continuously increasing hardware overhead leads to ever-rising costs. Moreover, bandwidth severely restricts product performance, with the alternating upgrades of parallel bus communication and serial bus communication, bandwidth remains the bottleneck for communication between multiple dies. To improve the overall performance of multiple dies systems, it is necessary to increase the communication bandwidth between multiple dies.

The communication bus specifies a specific address in the request channel when transmitting a request, indicating that information can be sent to that address. However, when information needs to be sent to a plurality of addresses, a plurality of requests need to be sent. In the case of a single die, the delay generated by communication within a die is relatively small, and only has little impact on performance. However, in the cases of cross-die communication and multiple dies communication, the impact of delay is more serious. In particular, when transmitting a plurality of pieces of information to a plurality of addresses in cross-die communication, a plurality of requests need to be used, which is inefficient, and the resulting delay may seriously affect the performance of multiple dies communication.

At least one embodiment of the present disclosure provides a communication method, applied to a first apparatus, the method includes: acquiring, in response to a plurality of access requests from a sender to a plurality of addresses in a receiver, a communication packet encapsulated from request information of the plurality of access requests, where the request information of each of the plurality of access requests includes an type operation and an operation address; and transmitting the communication packet to the receiver, for the receiver to parse the communication packet to obtain request information of each of the plurality of access requests.

The communication method provided by the above embodiments of the present disclosure encapsulates the request information of the plurality of access requests to obtain the communication packet, and by using the communication packet, transmitting a single request enables sending information to a plurality of addresses, enabling a significant increase in the amount of data transmitted between the sender and the receiver in a single communication, and may improve the performance of multiple chips and multiple dies communication.

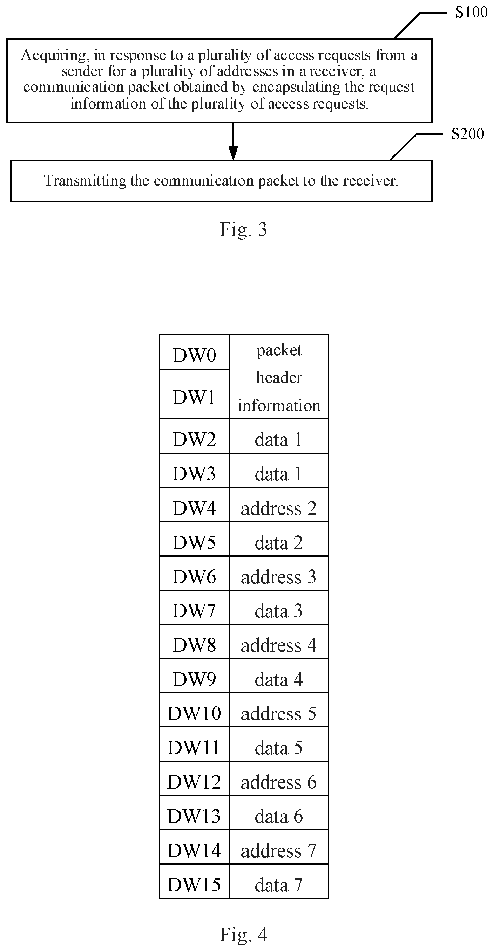

Fig. 3 shows a schematic flowchart of a communication method provided by some embodiments of the present disclosure. As shown in Fig. 3, the communication method provided by at least one embodiment of the present disclosure includes steps S100 to S200, and the communication method may be applied to a first apparatus.

Step S100, acquiring, in response to a plurality of access requests from a sender for a plurality of addresses in a receiver, a communication packet encapsulated from request information of the plurality of access requests.

In step S100, the request information of each of the plurality of access requests may include an operation type and an operation address. In the present disclosure, operation and command are two different concepts. A command refers to a type of access request on a communication bus. An operation type may be an operation that needs to be executed to complete the access request of the sender, or may be an operation executed by the receiver. The operation type may be determined according to the request type, for example, access request types include commands such as read command and write command, and the operation types may include operations such as write operation and read operation. It should be noted that the fact that the operation type is determined according to the request type does not mean that a write command may only correspond to a write operation, nor does it mean that a read command may only correspond to a read operation and the like; the embodiments of the present disclosure do not limit the corresponding relationship between the operation type and the request type.

In the above embodiments, the communication packet may include a packet header and a packet body. For example, the packet header includes the operation type for each of the plurality of access requests and the quantity of the plurality of operation addresses, where the packet body includes an operation address for each of the plurality of operation addresses.

For example, the packet body in the above embodiment may include a plurality of fields set in sequence, and each of the plurality of fields may be configured to record an operation address of a single access request in the request information of the plurality of access requests. For example, when the operation type is a read operation, i.e., when the sender needs to read the data of the receiver, the operation address of a single access request in the request information of the plurality of access requests may be recorded in each of the plurality of fields of the packet body.

For example, when the operation type is a write operation, i.e., when the data of the sender is to be written to the receiver, the packet body may further include object data to be operated respectively by each of the plurality of access requests, and each of the plurality of fields may further be configured to record the object data of the single access request in the request information of the plurality of access requests.

In the above embodiment of the present disclosure, by dividing a communication packet into a packet header and a packet body, where the packet header includes the operation type of each of the plurality of access requests and the quantity of the required plurality of operation addresses of the plurality of access requests, and a plurality of fields are set sequentially in the packet body, each of the plurality of fields is configured to record the operation address of a single access request in the plurality of access requests and the object data to be operated on for each access request, this makes it possible to satisfy a plurality of access requests of the sender to a plurality of addresses in the receiver by a single transmission, and to perform different types of operations including a read operation and a write operation according to the command type of access requests. In the embodiments of the present disclosure, using the aforementioned communication packet may increase the amount of data in a single transmission and improve communication efficiency.

Fig. 4 shows a schematic diagram of an exemplary structure of a communication packet provided by some embodiments of the present disclosure.

For example, take the data bit width of the bus being 512 bit as an example for illustration. 32 bit may represent a double word, thereby the 512 bit has 16 double words. As shown in Fig. 4, the packet header of a communication packet uses two double words including DW0 and DW1, that is, there are 64 bits of hardware resources available for the packet header to use. Additionally, the quantity of double words to be used in the packet header of the communication packet may be defined according to specific requirements. The packet header may define the operation type for each of a plurality of access requests and the quantity of a plurality of operation addresses. The operation types include, for example, a read operation and a write operation on addresses, or other operation types defined according to the requirements, and the data format in the packet body may be specifically defined according to the operation types. The remaining 14 double words DW2-DW15 in the communication packet may all be configured to be the packet body.

In a hardware implementation, all the information requires taking up hardware resources, thereby when considering the overall performance, the hardware resources may limit the transmission of communication packet. For example, transmitting a communication packet data with a data bus bit width of 16 double words from a data channel may be referred to as 1 beat, and when an access request may contain multiple beats of communication packet data, the access request may then operate on more addresses, resulting in higher performance. For example, adopting the format of one address and one piece of data in the packet body, and the structure shown in Fig. 4 may be used, where one beat of data may operate on up to 7 addresses. The quantity of addresses that one beat of data needs to operate on may be designed according to actual requirements, and the specific addresses and corresponding data may be explained in the packet body.

Step S200, transmitting the communication packet to the receiver.

In step S200, the communication packet is transmitted to the receiver, for the receiver to parse the communication packet and obtain the request information of each of the plurality of access requests.

For example, the communication bus protocol shown in Fig. 2 may be used for the transmission of the communication packet between the sender and the receiver, or other communication protocols may be used for the transmission, and the embodiments of the present disclosure are not limited thereto.

The communication method provided by the above embodiments of the present disclosure does not require additional requirements for the request type of the communication bus, thus the difficulty of design is low, and the communication method may be quickly implemented on chips and dies.

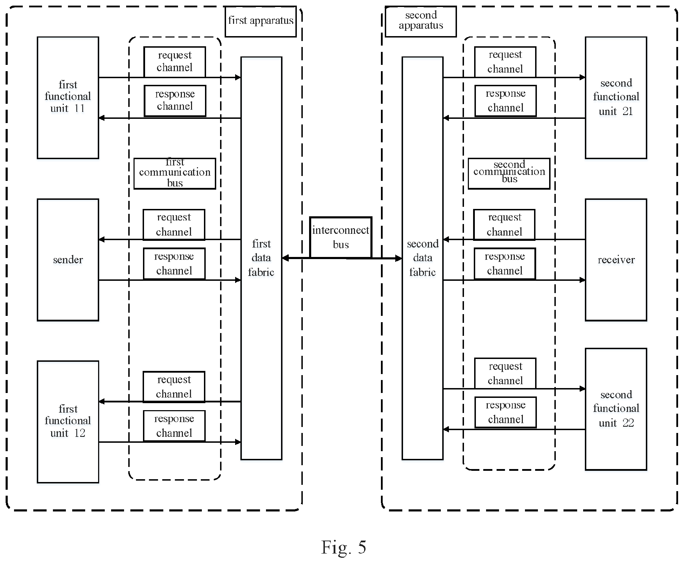

Fig. 5 shows schematic structures of a first apparatus and a second apparatus provided by some embodiments of the present disclosure.

As shown in Fig. 5, in the communication method provided by the above embodiments of the present disclosure, the sender and the receiver may be located respectively in the first apparatus and the second apparatus, where the first apparatus and the second apparatus are communicatively connected through an interconnect bus. The embodiments of the present disclosure have no limitation on the specific type, specification, or protocol adopted for the interconnect bus.

For example, in at least one embodiment of the present disclosure, a first apparatus and a second apparatus may be a chip (e.g., a conventional chip or a chiplet) or a die, and the embodiments of the present disclosure are not limited thereto.

It should be noted that although Fig. 5 only shows a sender in the first apparatus, and a receiver in the second apparatus, the first apparatus may further include a receiver in addition to the sender, and the second apparatus may further include a sender in addition to the receiver, and the sender in the second apparatus may communicate with the receiver in the first apparatus using the communication method provided by embodiments of the present disclosure.

In the above embodiment, the first apparatus may include a plurality of first functional units, a first communication bus, and a first data fabric, where the plurality of first functional units include a sender, for example, the plurality of first functional units include a first functional unit 11, a first functional unit 12, and a sender, where the first functional unit 11, the first functional unit 12, and the sender included in the first functional units are communicatively connected to each other through the first communication bus and the first data fabric. The second apparatus may include a plurality of second functional units, a second communication bus and a second data fabric, where the plurality of second functional units include a receiver, for example, the plurality of second functional units include a second functional unit 21 , a second functional unit 22 and a receiver, where the second functional unit 21 , the second functional unit 22 and the receiver are communicatively connected to each other through the second communication bus and the second data fabric.

In the above embodiment, the operation of transmitting a communication packet to the receiver may include: transmitting, in response to the communication packet being arbitrated by the first data fabric, the communication packet to the receiver.

During the transmission of the communication packet, the first data fabric and the second data fabric are used for arbitration. The data fabric may generally connect a plurality of senders and a plurality of receivers, and determines which sender transmits the access request to which receiver by arbitration. For example, before the communication packet is transmitted, the first data fabric is configured to determine to which receiver the communication packet is sent. For example, afterwards, the second data fabric is configured to arbitrate whether the communication packet is to be sent to the receiver, and the communication packet may be transmitted to the receiver after passing the arbitration.

In the above embodiment, the operation of transmitting the communication packet may include: transmitting the communication packet using a communication protocol, where the communication protocol may provide a plurality of information channels, for example, the plurality of information channels include a request channel, a read response channel, a write response channel, and a data channel. In this regard, the request channel, the read response channel, the write response channel, and the data channel included in the communication protocol may be understood with reference to the channels of the communication bus protocol provided in Fig. 2, and will not be repeated here.

In the above embodiment, the operation of transmitting the communication packet to the receiver may include: transmitting the communication packet to the receiver by the first apparatus through the data channel.

In the communication method provided by embodiments of the present disclosure, the transmitting the communication packet to the receiver may include: transmitting the communication packet to the receiver by the first apparatus through a write command.

In combination with the foregoing description of the definition of the communication bus, taking the two request types of a read command and a write command as examples, the read command does not need to send data, while the read response needs to return data; the write command needs to send data, while the write response does not need to return data. Therefore, in a case without changing the communication bus protocol or adding additional definitions, a first apparatus may transmit a communication packet to a receiver through a write command in the same manner as data is transmitted through a write command.

In the above embodiment, transmitting the communication packet to the receiver may include: splitting the communication packet into multiple beats and transmitting the communication packet to the receiver by the first apparatus.

Due to the impact of hardware bandwidth, when the communication packet has a large amount of data, the communication packet may be transmitted in multiple beats. For example, when the data bit width of a bus is 512 bits, transmitting data with a data bus bit width is referred to be one beat, and the first apparatus may split the communication packet into multiple beats for transmission according to the data bit width of the bus. It should be noted that the data bit width of 512 bits is for illustrative purposes only; depending on practical applications, the data bit width may be other values such as 256 bits or 1024 bits.

It should be understood that the foregoing illustrates the communication method provided by the embodiments of the present disclosure in terms of a first apparatus and a second apparatus, but the communication method provided by the present disclosure is not limited to two apparatuses, and may be applied to communication between more apparatuses, such as four apparatuses, eight apparatuses, and the like.

In the communication method provided by some embodiments of the present disclosure, when the plurality of access requests are a plurality of write commands, in the first apparatus, the request information of the plurality of write commands is filled into a communication packet to encapsulate and obtain the communication packet.

The communication method provided by the above embodiments further includes: receiving, in response to the second apparatus receiving the plurality of write commands, a write response from the receiver.

The above embodiment uses the communication packet in the communication process between the first apparatus and the second apparatus, which enables the execution of a plurality of write commands in a single communication process, thereby improving the communication efficiency, and improving the performance of the multiple chips and multiple dies system. And the second apparatus issues a write response after receiving the plurality of write commands, rather than issues the write response after completing the write commands, which reduces hardware overhead.

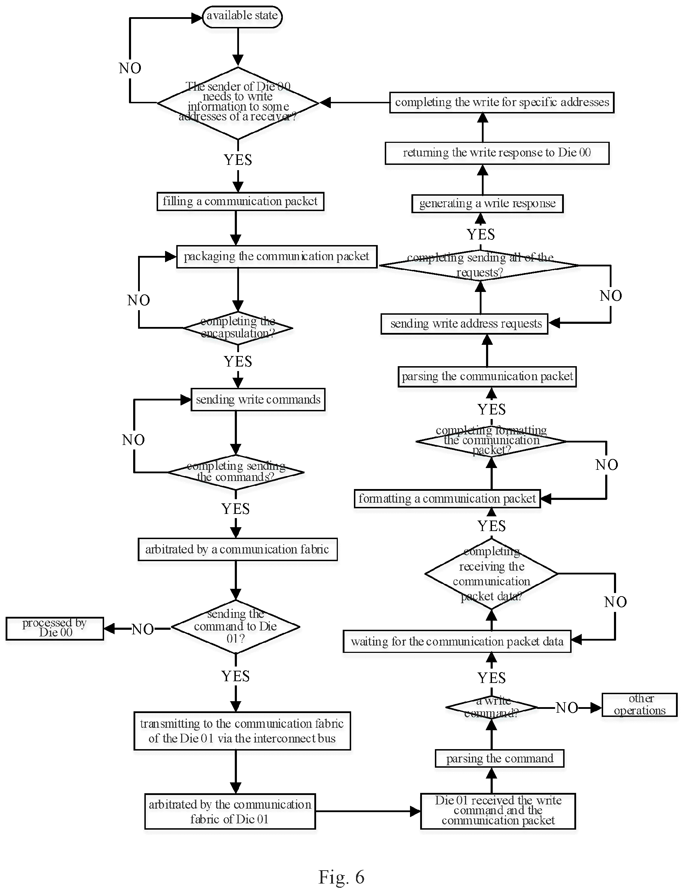

Fig. 6 is a schematic flowchart of a process for executing a write command provided by some embodiments of the present disclosure. The process of executing a write command provided by embodiments of the present disclosure is described below in connection with Fig. 6.

For example, a first apparatus and a second apparatus are both dies, the first apparatus being Die 00 and the second apparatus being Die 01. First, when the sender of Die 00 needs to write information of certain addresses of the receiver, it needs to fill in a communication packet, for example, fill in the communication packet with request information of the plurality of write commands, write the quantity of addresses that need to be written into a specified field in a packet header of the communication packet, and set the operation type to a write operation; write the operation address of each of the plurality of write commands along with the object data to be operated by each of the plurality of write commands respectively into the packet body of the communication packet. After the packaging of the aforementioned information is completed, to encapsulate and obtain the communication packet.

Then, a write command is sent by Die 00, for example, the write command may be sent by the sender in Die 00. After the write command is sent, it is determined by the communication fabric (i.e., the data fabric mentioned above), and when the write command is not sent to Die 01 after arbitration, the write command may be processed by the module in Die 00; when the write command is processed by Die 01 after arbitration, i.e., the command is transmitted to the communication fabric of Die 01 through the interconnect bus, for example, the write command is transmitted through the request channel, and for example, the communication packet is transmitted through the data channel, when the communication packet data has multiple beats, transmitting each beat of data in turn. After being arbitrated by the communication fabric of Die 01, the write command and the communication packet are received by Die 01, for example, the write command and the communication packet may be received by the receiver in Die 01.

Afterwards, the command and the communication packet are parsed by the receiver in Die 01, and when the command is found to be a write command by parsing the command, the formation of the communication packet is started after the data reception of the communication packet is completed. After completing the formation of the communication packet, parsing the communication packet enables obtaining which data to write into which operation addresses. For example, when the specific execution of the write command in Die 01 is the data module in Die 01, the write address request of the write command needs to be sent to the data module in Die 01. A write response may be sent, after the data module receives the plurality of write commands, by the receiver of Die 01 to the sender of Die 00, marking the completion of the execution of multiple write commands this time.

It should be noted that in an example, in the process described above, the write response is sent after the write commands are sent to the data module of Die 01, rather than the write response being sent after completing the execution of the write commands. This is because sending the write response after the write commands are sent to the data module of Die 01 requires less hardware overhead.

It should be noted that in the above embodiments, the sender and the receiver may belong to different dies, for example, the sender belongs to Die 00 and the receiver belongs to Die 01, or the sender and the receiver may belong to the same die, and the embodiments of the present disclosure are not limited thereto.

In the communication method provided by some embodiments of the present disclosure, when a plurality of access requests are a plurality of read commands, acquiring a communication packet encapsulated from request information of the plurality of access requests includes: in a first apparatus, filling request information of a plurality of read commands into a communication packet, to encapsulate and obtain the communication packet.

In the above embodiment, transmitting the communication packet to a receiver includes: after the first apparatus encapsulates to obtain the communication packet, the first apparatus sends a write command, and transmits the communication packet to the second apparatus through the write command.

The communication method provided by the above embodiments may further include: receiving a read response from the receiver. For example, in response to the second apparatus completing the plurality of read commands, the first apparatus may receive the read response from the receiver.

In the above embodiment, in response to completing the plurality of read commands requiring multiple beats return data, the read response includes multiple beats read response information, and the quantity of beats of the multiple beats return data is equal to the quantity of beats of the multiple beats read response information.

The embodiment described above by using the communication packet in the communication process between the first apparatus and the second apparatus, enables the execution of a plurality of read commands in a single communication process, thereby improving communication efficiency to improve the performance of the multiple chips and multiple dies system.

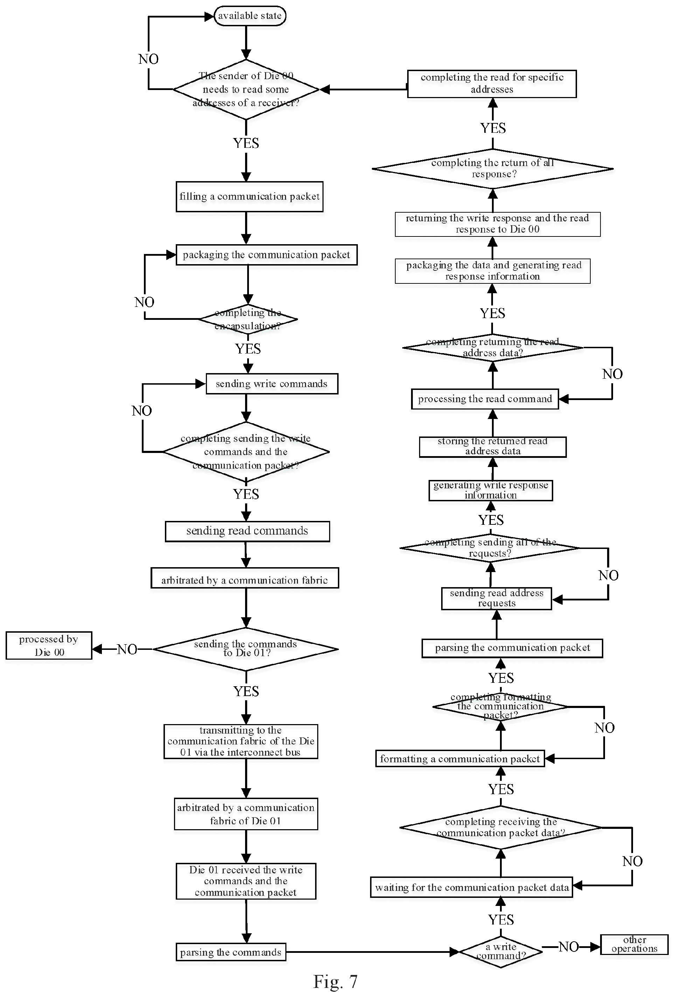

Fig. 7 is a schematic flowchart of a process for executing a read command provided by some embodiments of the present disclosure. The process of executing read commands provided by embodiments of the present disclosure is described below in connection with Fig. 7.

For example, similarly, a first apparatus is Die 00 and a second apparatus is Die 01. First, when the sender of Die 00 needs to read information of certain addresses of the receiver, it needs to fill in a communication packet, for example, fill in the communication packet with request information of the plurality of read commands, write the quantity of addresses that need to be read into a specified field in the packet header of the communication packet, and set the operation type to a read operation; write the operation address of each of the plurality of read commands into the packet body of the communication packet. After completing the packaging, the communication packet is obtained through encapsulation.

Since the read command does not need to send data according to the communication bus protocol, the read command cannot directly transmit the communication packet itself, and the communication packet needs to be sent by a write command, and after the communication packet is encapsulated, the sender needs to send a write command to the receiver, and the communication packet is sent through a data channel, where when the communication packet data has multiple beats, each beat of the data is sent in turn, and the communication packet is received by the receiver through the write command.

Then, the sender may proceed to send the read command. Since the read command does not carry data, there is no need to encapsulate the communication packet, and the read command is sent directly through the communication bus. The quantity of the plurality of operation addresses of the data to be read by the read command, and the operation address of each of the plurality of operation addresses, are consistent with the corresponding information in the aforementioned communication packet sent by the write command. The two communication bus requests of the write command and the read command and the communication packet are arbitrated by the communication fabric in Die 00, and when the write command and the read command are not sent to Die 01, the write command and the read command may be processed by the module in Die 00; when the write command and the read command are processed by Die 01 after arbitration, the write command and the read command are to be transmitted through the interconnect bus to the communication fabric of Die 01, for example, the write command and the read command are transmitted through a request channel, and for example, the communication packet is transmitted through a data channel. After arbitration of the communication fabric of Die 01, the commands and the communication packet are received by Die 01, for example, the commands and the communication packet are processed by the receiver in Die 01.

Afterwards, the commands and the communication packet are parsed by the receiver in Die 01, and when the first command is found to be a write command by parsing, the formation of a communication packet is started after the data reception of the communication packet is completed. By parsing the communication packet after completing the formation of the communication packet, from which operation addresses to read data is obtained, and the read address requests are sent to the module in Die 01 that specifically executes read commands. Write response information may be generated in Die 01 after completing transmitting a plurality of read operation address requests, while the read address requests may read the data corresponding to the plurality of operation addresses back, and stored locally in Die 01.

After Die 01 has processed the first write command, the second read command is then processed. After parsing the second command and finding that it is a read command, the data returned from the plurality of operation addresses stored locally in Die 01 is packaged, and when the amount of data is large, it is required to return multiple beats data, and one beat of response information is generated after one beat of data is packaged, where the quantity of beats of the returned data is equal to the quantity of beats of the multiple beats response information.

It should be noted that the response information of the first write command may be returned through a write response channel, and the response information of the second read command may be returned through a read response channel. The response information may be returned by the receiver of Die 01 to the communication fabric of Die 01 first, and after being arbitrated by the communication fabric of Die 01, the response information is returned to the communication fabric of Die 00, and the communication fabric of Die 00 returns the response information to the sender of Die 00. Accordingly, when it is the write response information for the write command, it indicates that the write command is completed, and when it is the read response information for the read command, return data is acquired from the read response information to the sender of Die 00 for further processing. After the write response and the read response being returned to Die 00, it indicates that the execution of the plurality of read commands is completed this time.

The above embodiments of the present disclosure illustrate the communication method provided by the present disclosure mainly from the perspective of the sender of a first apparatus, and the following illustrates the communication method provided by the embodiments of the present disclosure from the perspective of the receiver of a second apparatus.

At least one embodiment of the present disclosure provides a communication method, applied to a second apparatus, the method includes: receiving a communication packet from a sender, where the communication packet is obtained by encapsulating from request information of a plurality of access requests of the sender for a plurality of addresses in a receiver, the request information of each of the plurality of access requests includes an operation type and an operation address; parsing the communication packet to obtain the request information of each of the plurality of access requests; and executing the plurality of access requests respectively according to the request information of each of the plurality of access requests obtained by parsing.

The communication method provided by the above embodiments of the present disclosure, by receiving the communication packet encapsulated from the request information of the plurality of access requests, and parsing the communication packet, may obtain the request information of the plurality of access requests in a single communication process, and then execute the plurality of access requests according to the request information of each of the access requests obtained by parsing, which enables a significant increase in the amount of data transmitted between the sender and the receiver in a single communication, and may improve the performance of multiple chips and multiple dies communication..

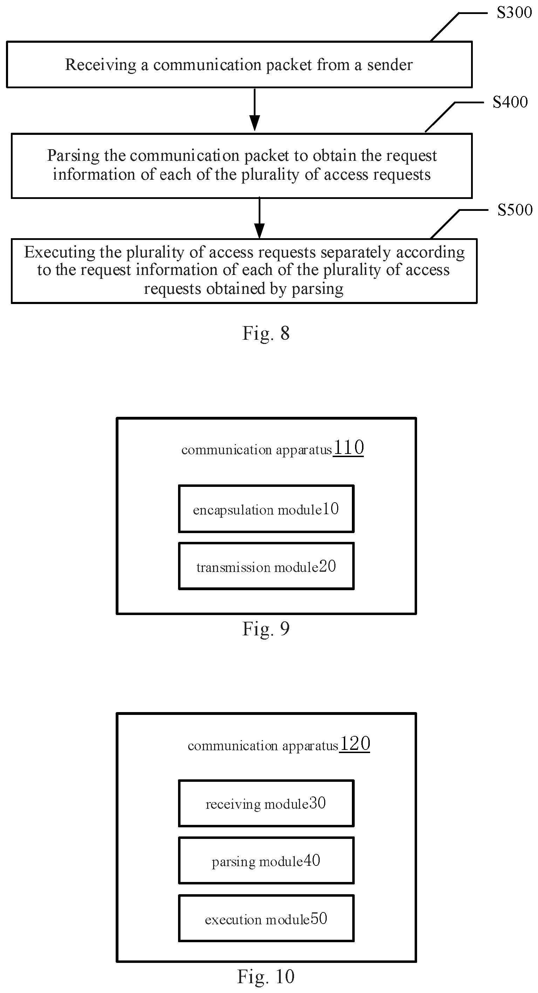

Fig. 8 is a schematic flowchart of another communication method provided by some embodiments of the present disclosure. As shown in Fig. 8, the communication method provided by the above embodiments includes steps S300 to S500, and the method may be applied to a second apparatus.

Step S300, receiving a communication packet from a sender.

In step S300, the communication packet may be encapsulated from a plurality of access requests of the sender for a plurality of addresses in a receiver, and the request information of each of the plurality of access requests includes an operation type and an operation address.

Step S400, parsing the communication packet to obtain the request information of each of the plurality of access requests.

Since the communication packet is encapsulated from the request information of the plurality of access requests, it is required to parse the communication packet to obtain the request information of each of the plurality of access requests. In step S400, parsing the communication packet received from the sender enables obtaining the request information of each of the plurality of access requests.

Step S500, executing the plurality of access requests respectively according to the request information of each of the plurality of access requests obtained by parsing.

In the above embodiment, the sender and the receiver may be located respectively in a first apparatus and a second apparatus, where the first apparatus and the second apparatus are communicatively connected through an interconnect bus, the second apparatus includes a plurality of second functional units, a second communication bus and a second data fabric, where the plurality of second functional units include a receiver, and the plurality of second functional units are communicatively connected to each other through the second communication bus and the second data fabric.

The description of the second apparatus may refer the description of Fig. 5 above and will not be repeated here.

In the above embodiment, receiving the communication packet from the sender includes: in response to the communication packet being arbitrated by the second data fabric, the receiver receives the communication packet from the sender.

In the above embodiment, receiving the communication packet from the sender includes: in response to the first apparatus transmitting the communication packet through a write command, the second apparatus receives the communication packet from the sender, and generates a response to the write commands.

In the above embodiment, receiving the communication packet from the sender includes: in response to the first apparatus splitting the communication packet into multiple beats for transmission, receiving the multiple beats from the sender and reconstructing the multiple beats to obtain the communication packet.

Due to the impact of hardware bandwidth, when the communication packet has a large amount of data, the first apparatus may split the communication packet into multiple beats for transmission. The second apparatus may sequentially receive the communication packet transmitted in multiple beats, reconstruct the received multiple beats data to obtain a complete communication packet, and then parse the communication packet.

In the above embodiment, for example, when the plurality of access requests are write commands, parsing the communication packet to obtain request information of each of the plurality of access requests includes: parsing the communication packet to obtain a write command address and write command data for each of the plurality of write commands. The communication method provided by the present disclosure further includes: in response to the data module of the second apparatus receiving the plurality of write commands, transmitting a write response to the sender. It should be noted that the timing of transmitting the write response to the sender in the above embodiment is after the data module of the second apparatus receives the plurality of write commands, and such an operation may save hardware overhead.

In the above embodiment, for example, when the plurality of access requests are read commands, the plurality of access requests are a plurality of read commands, and receiving the communication packet from the sender includes: receiving the communication packet from the sender by receiving a write command. The communication method provided by the present disclosure further includes: in response to the second apparatus completing the plurality of read commands, transmitting a read response to the sender.

Fig. 9 is a schematic diagram of a communication apparatus provided by some embodiments of the present disclosure, and the communication apparatus may be configured in a first apparatus.

As shown in Fig. 9, the communication apparatus 110 includes an encapsulation module 10 and a transmission module 20. The encapsulation module 10 is configured to acquire, in response to a plurality of access requests from a sender to a plurality of addresses in a receiver, the communication packet encapsulated from request information of the plurality of access requests, where the request information of each of the plurality of access requests includes an operation type and an operation address. The transmission module 20 is configured to transmit the communication packet to the receiver, for the receiver to parse the communication packet to obtain request information of each of the plurality of access requests.

The communication apparatus provided by the above embodiment enables a significant increase in the amount of data transmitted between the sender and the receiver in a single communication, and improves the performance of multiple chips and multiple dies communication.

In the communication apparatus provided by the above embodiment, the communication packet includes a packet header and a packet body, where the packet header includes an operation type for each of the plurality of access requests, and the quantity of the plurality of operation addresses, where the packet body includes an operation address for each of the plurality of operation addresses.

In the communication apparatus provided by the above embodiment, the packet body includes a plurality of fields set in sequence, each of the plurality of fields is configured to record the operation address of a single access request in request information of the plurality of access requests.

In the communication apparatus provided by the above embodiment, in response to the operation type being a write operation, the packet body further includes object data to be operated respectively by each of the plurality of access requests, and each of the plurality of fields is further configured to record the object data of a single access request in the request information of the plurality of access requests.

In the communication apparatus provided by the above embodiment, the sender and the receiver are located respectively in the first apparatus and a second apparatus, and the first apparatus and the second apparatus are communicatively connected through an interconnect bus.

In the apparatus provided by the above embodiment, the first apparatus and the second apparatus include a core or a chiplet.

In the communication apparatus provided by the above embodiment, the first apparatus includes a plurality of first functional units, a first communication bus and a first data fabric, the plurality of first functional units include the sender, and the plurality of first functional units are communicatively connected to each other through the first communication bus and the first data fabric.

In the communication apparatus provided by the above embodiment, when the transmission module executes the transmitting the communication packet to the receiver, it includes performing the following operation: transmitting, in response to the communication packet being arbitrated by the first data fabric, the communication packet to the receiver.

In the communication apparatus provided by the above embodiment, when the transmission module executes the transmission of the communication packet, it includes performing the following operation: transmitting the communication packet using a communication protocol, where the communication protocol provides a plurality of information channels, the plurality of information channels including a request channel, a read response channel, a write response channel, and a data channel.

In the communication apparatus provided by the above embodiment, when the transmission module executes the transmitting the communication packet to the receiver, it includes performing the following operation: transmitting the communication packet to the receiver through the data channel by the first apparatus.

In the communication apparatus provided by the above embodiment, when the transmission module executes the transmitting the communication packet to the receiver, it includes performing the following operation: transmitting the communication packet to the receiver through a write command by the first apparatus.

In the communication apparatus provided by the above embodiment, when the transmission module executes the transmitting the communication packet to the receiver, it includes performing the following operation: splitting the communication packet into multiple beats and transmitting the communication packet to the receiver by the first apparatus.

In the communication apparatus provided by the above embodiment, the plurality of access requests are a plurality of write commands, and when the encapsulation module executes the acquisition of the communication packet encapsulated from the request information of the plurality of access requests, it includes performing the following operation: in the first apparatus, filling the request information of the plurality of write commands into the communication packet to encapsulate and obtain the communication packet.

The communication apparatus provided by the above embodiment further includes a response receiving module, the receiving module is configured to receive, in response to the second apparatus receiving the plurality of write commands, a write response from the receiver.

In the communication apparatus provided by the above embodiment, the plurality of access requests are a plurality of read commands, and when the encapsulation module executes the acquisition of the communication packet encapsulated from the request information of the plurality of access requests, it includes performing the following operation: in the first apparatus, filling the request information of the plurality of read commands into the communication packet to encapsulate and obtain the communication packet.

In the communication apparatus provided by the above embodiment, when the transmission module executes the transmitting the communication packet to the receiver, it includes performing the following operation: after the communication packet is obtained by encapsulation in the first apparatus, the first apparatus sends a write command, and transmits the communication packet to the second apparatus through the write command.

In the communication apparatus provided by the above embodiment, the response receiving module is configured to receive a read response from the receiver.

In the communication apparatus provided by the above embodiment, in response to completing the plurality of read commands requiring multiple beats return data, the read response includes multiple beats read response information, and the quantity of beats of the multiple beats return data is equal to the quantity of beats of the multiple beats read response information.

Fig. 10 is a schematic diagram of another communication apparatus provided by some embodiments of the present disclosure, and the communication apparatus may be configured in a second apparatus.

As shown in Fig. 10, the communication apparatus 120 includes a receiving module 30, a parsing module 40, and an execution module 50. The receiving module 30 is configured to receive a communication packet from a sender, where the communication packet is obtained by encapsulating from request information of a plurality of access requests of the sender for a plurality of addresses in a receiver, and the request information of each of the plurality of access requests includes an operation type and an operation address. The parsing module 40 is configured to parse the communication packet to obtain the request information of each of the plurality of access requests. The execution module 50 is configured to execute the plurality of access requests respectively according to the request information of each of the plurality of access requests obtained by parsing. In the above embodiment, the sender and the receiver are located respectively in a first apparatus and the second apparatus, and the first apparatus and the second apparatus are communicatively connected through an interconnect bus, the second apparatus includes a plurality of second functional units, a second communication bus and a second data fabric, the plurality of second functional units include the receiver, and the plurality of second functional units are communicatively connected to each other through the second communication bus and the second data fabric.

In the above embodiment, when the receiving module executes receiving the communication packet from the sender, it includes performing: in response to the communication packet being arbitrated by the second data fabric, the receiver receiving the communication packet from the sender.

In the above embodiment, when the receiving module executes receiving the communication packet from the sender, it includes performing: in response to the first apparatus transmitting the communication packet through a write command, the second apparatus receiving the communication packet from the sender and generating a response to the write command.

In the above embodiment, when the receiving module executes receiving the communication packet from the sender, it includes performing: in response to the first apparatus splitting the communication packet into multiple beats for transmission, receiving the multiple beats from the sender and reconstructing the multiple beats to obtain the communication packet.

In the above embodiment, the plurality of access requests are a plurality of write commands, and when the parsing module executes parsing the communication packet to obtain request information of each of the plurality of access requests, it includes performing: parsing the communication packet to obtain a write command address and write command data for each of the plurality of write commands. The communication apparatus provided by the above embodiment further includes a response transmitting module, configured to send, in response to the data module of the second apparatus receiving the plurality of write commands, a write response to the sender.

In the above embodiment, when the parsing module executes the parsing of the communication packet to obtain request information of each of the plurality of access requests, it includes performing: receiving the communication packet from the sender by receiving a write command. The response transmitting module is configured to send, in response to the second apparatus completing the plurality of read commands, a read response to the sender.

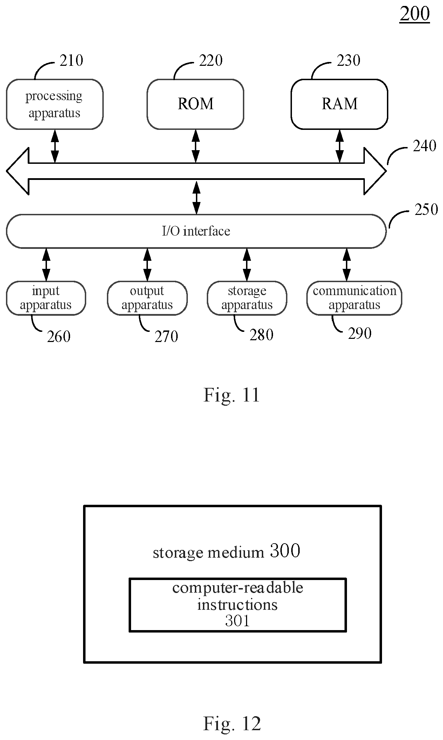

Fig. 11 is a schematic diagram of the structure of an electronic device provided by some embodiments of the present disclosure. The terminal devices in some embodiments of the present disclosure may include but are not limited to mobile terminals such as a mobile phone, a notebook computer, a digital broadcasting receiver, a personal digital assistant (PDA), a portable tablet device (PAD), a portable media player (PMP), a vehicle-mounted terminal (e.g., a vehicle-mounted navigation terminal) or the like, and fixed terminals such as a digital TV, a desktop computer, or the like. The electronic device illustrated in Fig. 11 is merely an example, and should not pose any limitation to the functions and the range of use of the embodiments of the present disclosure.

As illustrated in Fig. 11, the electronic device 200 may include a processing apparatus 210 (e.g., one or more central processing unit (s), one or more graphics processing unit(s), etc.), which can perform various suitable actions and processing according to a program stored in a read-only memory (ROM) 220 or a program loaded from a storage apparatus 280 into a random-access memory (RAM) 230. The processing apparatus 210 includes the communication apparatus according to any embodiment of the present disclosure. The RAM 230 further stores various programs and data required for operations of the electronic device 200. The processing apparatus 210, the ROM 220, and the RAM 230 are interconnected by means of a bus 240. An input/output (I/O) interface 250 is also connected to the bus 240.

Usually, the following apparatuses may be connected to the I/O interface 250: an input apparatus 260 including, for example, a touch screen, a touch pad, a keyboard, a mouse, a camera, a microphone, an accelerometer, a gyroscope, or the like; an output apparatus 270 including, for example, a liquid crystal display (LCD), a loudspeaker, a vibrator, or the like; a storage apparatus 280 including, for example, a magnetic tape, a hard disk, or the like; and a communication apparatus 290. The communication apparatus 290 may allow the electronic device 200 to be in wireless or wired communication with other electronic devices to exchange data. While Fig. 11 illustrates the electronic device 200 having various apparatuses, it should be understood that not all of the illustrated apparatuses are necessarily implemented or included, more or fewer apparatuses may be implemented or included alternatively.

For example, according to some embodiments of the present disclosure, the communication method described above may be implemented as a computer software program. For example, some embodiments of the present disclosure include a computer program product, which includes a computer program carried by a non-transitory computer-readable medium, and the computer program includes program codes for performing the communication methods shown in the flowcharts.

In at least one embodiment of the present disclosure, the computer program may be downloaded through the communication apparatus 290 and installed, or may be installed from the storage apparatus 280, or may be installed from the ROM 220. When the computer program is executed by the processing apparatus 210, the functions defined in the communication methods of some embodiments of the present disclosure are executed.

Some embodiments of the present disclosure further provide a storage medium for storing non-transitory computer program executable code (for example, computer-executable instructions). When the non-transitory computer program executable code is executed by a computer (for example, including one or more processors), the communication method according to any embodiment of the present disclosure may be implemented; alternatively, when the non-transitory computer program executable code is executed by a computer, the communication method provided by the embodiments of the present disclosure may be implemented.

Fig. 12 is a schematic diagram of a storage medium provided by some embodiments of the present disclosure. As shown in Fig. 12, the storage medium 300 stores non-transitorily computer-readable instructions 301. For example, when the computer-readable instructions 301 are executed by a computer (for example, including one or more processors), the communication method provided by the embodiment of the present disclosure may be implemented.

For example, the storage medium 300 may be applied in the electronic device 200 described above. For example, the storage medium 300 may be a ROM 220 in the electronic device 200 shown in Fig. 11. For example, the relevant description of the storage medium 300 may refer to the corresponding description of the ROM 220 in the electronic device 200 shown in Fig. 11, and will not be repeated here.

Although the present disclosure has been described in detail above with general explanations and specific implementations, it will be obvious to those skilled in the art that some modifications or improvements can be made on the basis of the embodiments of the present disclosure. Therefore, such modifications or improvements made without departing from the spirit of the present disclosure shall all fall within the protection scope claimed by the present disclosure.

For the present disclosure, the following should be noted:
(1) The drawings involve only the structure(s) in connection with the embodiment(s) of the present disclosure, and other structure(s) can be referred to common design(s).
(2) For clarity, in the drawings used to describe the embodiments of the present disclosure, the thickness of layers or regions is enlarged or reduced.
(3) Without conflict, the embodiments of the present disclosure and the features in the embodiments may be combined with each other to obtain new embodiments.

What have been described above are only specific embodiments of the present disclosure, the protection scope of the present disclosure is not limited thereto, and the protection scope of the present disclosure should be based on the protection scope of the claims.

## Claims

1. A communication method, applied to a first apparatus, comprising:
acquiring, in response to a plurality of access requests from a sender to a plurality of addresses in a receiver, a communication packet encapsulated from request information of the plurality of access requests, wherein the request information of each of the plurality of access requests comprises an operation type and an operation address; and
transmitting the communication packet to the receiver, for the receiver to parse the communication packet to obtain the request information of each of the plurality of access requests.

2. The communication method according to claim 1, wherein the communication packet comprises a packet header and a packet body, wherein the packet header comprises the operation type of each of the plurality of access requests and a quantity of a plurality of operation addresses, and the packet body comprises an operation address of each of the plurality of operation addresses.

3. The communication method according to claim 2, wherein the packet body comprises a plurality of fields that are set in sequence, each of the plurality of fields is configured to record an operation address of a single access request in request information of the plurality of access requests.

4. The communication method according to claim 3, wherein in response to the operation type being a write operation, the packet body further comprises object data to be operated respectively by each of the plurality of access requests, and each of the plurality of fields is further configured to record object data of the single access request in the request information of the plurality of access requests.

5. The communication method according to any one of claims 1 to 4, wherein the sender and the receiver are located respectively in the first apparatus and a second apparatus, and the first apparatus and the second apparatus are communicatively connected through an interconnect bus.

6. The communication method according to claim 5, wherein the first apparatus and the second apparatus comprises a core or a chiplet.

7. The communication method according to any one of claims 1-6, wherein the first apparatus comprises a plurality of first functional units, a first communication bus and a first data fabric, the plurality of first functional units comprises the sender, and the plurality of first functional units are communicatively connected to each other through the first communication bus and the first data fabric.

8. The communication method according to claim 7, wherein the transmitting the communication packet to the receiver comprises:
in response to the communication packet being arbitrated by the first data fabric, transmitting the communication packet to the receiver.

9. The communication method according to any one of claims 1-8, wherein the transmitting the communication packet comprises:
transmitting the communication packet by using a communication protocol, wherein the communication protocol provides a plurality of information channels, and the plurality of information channels comprises a request channel, a read response channel, a write response channel, and a data channel.

10. The communication method according to claim 9, wherein the transmitting the communication packet to the receiver comprises:
transmitting, by the first apparatus, the communication packet to the receiver through the data channel.

11. The communication method according to any one of claims 1-10, wherein the transmitting the communication packet to the receiver comprises:
transmitting, by the first apparatus, the communication packet to the receiver through a write command.

12. The communication method according to any one of claims 1-10, wherein the transmitting the communication packet to the receiver comprises:
splitting, by the first apparatus, the communication packet into multiple beats and transmitting the communication packet to the receiver.

13. The communication method according to any one of claims 5-12, wherein the plurality of access requests are a plurality of write commands, and acquiring the communication packet encapsulated from the request information of the plurality of access requests comprises:
filling the request information of the plurality of write commands into the communication packet in the first apparatus to encapsulate and obtain the communication packet.

14. The communication method according to claim 13, further comprising:
receiving, in response to the second apparatus receiving the plurality of write commands, a write response sent by the receiver.

15. The communication method according to any one of claims 5-12, wherein the plurality of access requests is a plurality of read commands, and acquiring the communication packet encapsulated from the request information of the plurality of access requests comprises:
filling the request information of the plurality of read commands into the communication packet in the first apparatus to encapsulate and obtain the communication packet.

16. The communication method according to claim 15, wherein the transmitting the communication packet to the receiver comprises:
after the first apparatus encapsulates and obtains the communication packet, the first apparatus sending a write command, and transmitting the communication packet to the second apparatus through the write command.

17. The communication method according to claim 16, further comprising: receiving a read response sent by the receiver.

18. The communication method according to claim 17, wherein in response to completing the plurality of read commands requiring multiple beats return data, the read response comprises multiple beats read response information, and a quantity of beats of the multiple beats return data is equal to a quantity of beats of the multiple beats read response information.

19. A communication method, applied to a second apparatus, comprising:
receiving a communication packet from a sender, wherein the communication packet is obtained by encapsulating request information of a plurality of access requests from the sender for a plurality of addresses in a receiver, and the request information of each of the plurality of access requests comprises an operation type and an operation address;
parsing the communication packet to obtain the request information of each of the plurality of access requests; and
executing the plurality of access requests respectively according to the request information of each of the plurality of access requests obtained by parsing the communication packet.

20. The communication method according to claim 19, wherein the sender and the receiver are respectively located in a first apparatus and the second apparatus, and the first apparatus and the second apparatus are communicatively connected through an interconnect bus,
wherein the second apparatus comprises a plurality of second functional units, a second communication bus and a second data fabric, the plurality of second functional units comprises the receiver, and the plurality of second functional units are communicatively connected to each other through the second communication bus and the second data fabric.

21. The communication method according to claim 20, wherein the receiving a communication packet from a sender comprises:
in response to the communication packet being arbitrated by the second data fabric, the receiver receiving the communication packet from the sender.

22. The communication method according to claim 20, wherein the receiving a communication packet from a sender comprises:
in response to the first apparatus transmitting the communication packet through a write command, the second apparatus receiving the communication packet from the sender and generating a response to the write command.

23. The communication method according to claim 20, wherein the receiving a communication packet from a sender comprises:
in response to the first apparatus splitting the communication packet into multiple beats for transmission, receiving the multiple beats from the sender and reconstructing the multiple beats to obtain the communication packet.

24. The communication method according to any one of claims 19-23, wherein the plurality of access requests are a plurality of write commands, the parsing the communication packet to obtain the request information of each of the plurality of access requests comprises:
parsing the communication packet to obtain a write command address and write command data of each of the plurality of write commands, and
the communication method further comprises:
in response to a data module of the second apparatus receiving the plurality of write commands, sending a write response to the sender.

25. The communication method according to any one of claims 19-23, wherein the plurality of access requests are a plurality of read commands, the receiving a communication packet from a sender comprises:
receiving the communication packet from the sender through receiving a write command; and
the communication method further comprises:
in response to the second apparatus completing the plurality of read commands, sending a read response to the sender.

26. A communication apparatus, configured in a first apparatus, comprising:
an encapsulation module, configured to acquire, in response to a plurality of access requests from a sender to a plurality of addresses in a receiver, a communication packet encapsulated from request information of the plurality of access requests, wherein the request information of each of the plurality of access requests comprises an operation type and an operation address; and
a transmission module, configured to transmit the communication packet to the receiver, for the receiver to parse the communication packet to obtain the request information of each of the plurality of access requests.

27. A communication apparatus, configured in a second apparatus, comprising:
a receiving module, configured to receive a communication packet from a sender, wherein the communication packet is obtained by encapsulating request information of a plurality of access requests from the sender for a plurality of addresses in a receiver, and the request information of each of the plurality of access requests comprises an operation type and an operation address;
a parsing module, configured to parse the communication packet to obtain the request information of each of the plurality of access requests; and
an execution module, configured to execute the plurality of access requests respectively according to request information of each of the plurality of access requests obtained by parsing the communication packet.

28. An electronic device, comprising:
at least one processor, and
a memory, storing computer-readable instructions non-transitorily, wherein when the computer-readable instructions are executed by the at least one processor, the communication method according to any one of claims 1 to 25 is executed.

29. A non-transitory storage medium, storing computer-readable instructions non-transitorily, wherein when the computer-readable instructions are executed by a computer, the communication method according to any one of claims 1 to 25 is executed.
